(19) Europäisches Patentamt
European Patent Office
Office européen des brevets

(11) **EP 2 287 784 A1**

(12) **EUROPEAN PATENT APPLICATION**
published in accordance with Art. 153(4) EPC

(43) Date of publication:
**23.02.2011 Bulletin 2011/08**

(51) Int Cl.:
*G06N 3/00* (2006.01)     *G06T 7/00* (2006.01)

(21) Application number: **09750615.8**

(22) Date of filing: **21.05.2009**

(86) International application number:
**PCT/JP2009/059308**

(87) International publication number:
**WO 2009/142253 (26.11.2009 Gazette 2009/48)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **21.05.2008  JP 2008133210**

(71) Applicant: **Sony Corporation
Tokyo 108-0075 (JP)**

(72) Inventor: **OKUBO Atsushi
Tokyo 108-0075 (JP)**

(74) Representative: **Beder, Jens
Mitscherlich & Partner
Patent-und Rechtsanwälte
Sonnenstraße 33
80331 München (DE)**

(54) **INFORMATION PROCESSING DEVICE, INFORMATION PROCESSING METHOD, AND PROGRAM**

(57) The present invention relates to an information processing unit, an information processing method, and a program that can allow two-class classification to be correctly performed based on the outputs from two or more classifiers.

The classifier $21_i$ (i = 1 to n) substitutes an input vector x into a classification function $f_i(x)$ to output a scalar value $y_i$. The mapper $22_i$ substitutes the scalar value $y_i$ provided from the classifier $21_i$ into a mapping function $g_i(y_i)$ found through a learning process described later to convert the scalar value $y_i$ from the classifier $21_i$ to a class existence probability $p_i$. The comparator 23 compares the class existence probabilities $p_1$ to $p_n$ provided from the mapper $22_1$ to $22_n$, respectively, with a predetermined threshold to classify which of two classes the input data belongs to, and outputs the classification result in the form of value "1" or "-1." The invention can be applied to, for example, an information processing unit for performing two-class classification.

[FIG.2]

EP 2 287 784 A1

**Description**

[Technical Field]

The present invention relates to information processing units, information processing methods, and programs, and, more particularly, to an information processing unit, an information processing method, and a program that allows two-class classification to be correctly performed based on the outputs from two or more classifiers.

[Background Art]

For example, for recognition processing such as human face recognition, a two-class classifier based on a statistical learning theory such as SVM (Support Vector Machines) and AdaBoost is commonly used (see Non-patent Document 1, for example).

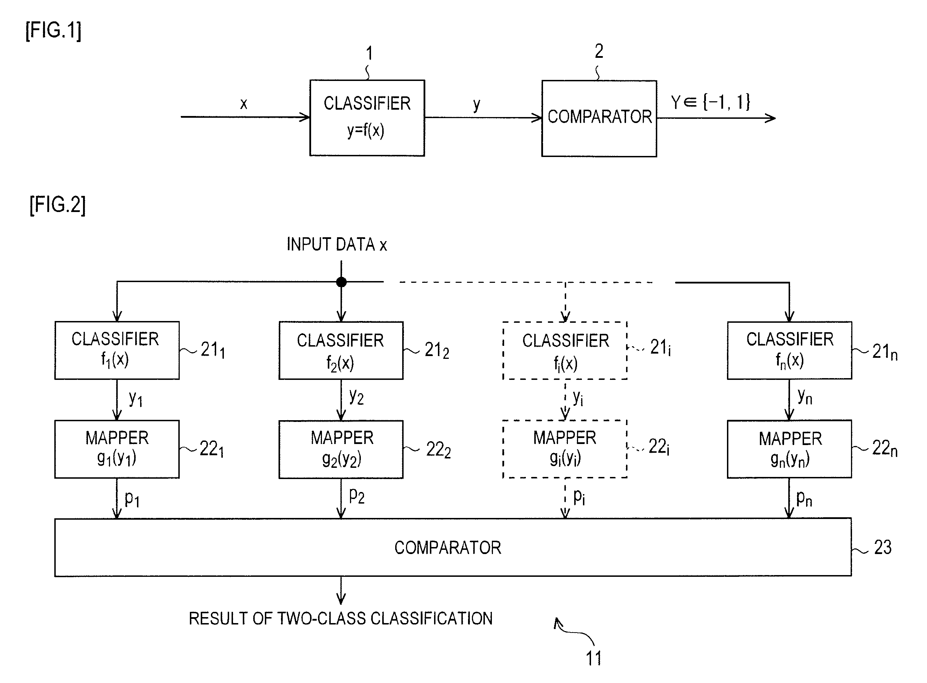

Fig. 1 is a block diagram showing an example of a configuration of a typical two-class classifier.
A classifier 1 has a classification function $f(x)$ found previously based on a statistical learning theory such as SVM and AdaBoost. The classifier 1 substitutes an input vector x into the classification function $f(x)$ and outputs a scalar value y as the result of substitution.
A comparator 2 determines which of two classes the scalar value y provided from the classifier 1 belongs to, based on whether the scalar value y is positive or negative, or whether the scalar value y is larger or smaller than a predetermined threshold, and outputs the determination result. Specifically, the comparator 2 converts the scalar value y to a value Y that is "1" or "-1" corresponding to one of the two classes and outputs the value Y.

[Background Art Document]

[Non-patent Document]

[Non-patent Document 1]

Bernd Heisele, "Face Recognition with Support Vector Machines: Global versus Component-based Approach", Massachusetts Institute of Technology Center for Biological and Computational Learning Canmbridge, U.S.A.

[Disclosure of the Invention]

[Problems that the Invention is to Solve]

In recognition process, it may be desirable to obtain a comprehensive classification result (class) based on scalar values y from two or more classifiers 1. However, the values output from the individual classifiers 1 according to their own classification functions $f(x)$ are based on the measures independent of each other. For example, even if a scalar value $y_1$ output from a first classifier 1 and a scalar value $y_2$ output from a second classifier 1 are the same value, the meanings of the individual values are different from each other. So, when the scalar values y from the various classifiers 1 are evaluated in a single uniform way (such as whether positive or negative or whether larger or smaller than a predetermined threshold), two-class classification may often not be correctly performed.
In view of the foregoing, the present invention allows two-class classification to be correctly performed based on the outputs from two or more classifiers.

[Means for Solving the Problems]

In accordance with one aspect of the invention, an information processing unit is provided, which includes: a classification means for outputting a scalar value for an input data using a classification function; a mapping means for mapping the scalar value to a probability value using a mapping function found using probability values calculated from test results that are scalar values output from the classification means when test data are provided to the classification means; and a two-class classification means for classifying which of two classes the input data belongs to based on the probability value output from the mapping means.
In accordance with one aspect of the invention, an information processing method is provided, in which: an information processing unit includes a classification means, a mapping means, and a two-class classification means, and classifies which of two classes an input data belongs to; the classification means outputs a scalar value for the input data using a classification function; the mapping means maps the scalar value to a probability value using a mapping function found using probability values calculated from test results that are scalar values output from the classification means when test data are provided to the classification means; and the two-class classification means classifies which of the two classes the input data belongs to based on the probability value output from the mapping means.

In accordance with one aspect of the invention, a program is provided, which causes a computer to operate as: a classification means for outputting a scalar value for an input data using a classification function; a mapping means for mapping the scalar value to a probability value using a mapping function found using probability values calculated from test results that are scalar values output from the classification means when test data are provided to the classification means; and a two-class classification means for classifying which of two classes the input data belongs to based on the probability value output from the mapping means.

In accordance with one aspect of the invention, a scalar value for an input data is output using a classification function, the scalar value is mapped to a probability value using a mapping function found using probability values calculated from test results that are scalar values output from a classification means when test data are provided to the classification means, and which of two classes the input data belongs to is classified based on the probability value mapped.

The information processing unit may be a separate unit or may be one block in a unit.

[Advantage of the Invention]

In accordance with one aspect of the invention, two-class classification can be correctly performed based on the outputs from two or more classifiers.

[Brief Description of the Drawings]

[Fig. 1] It is a block diagram showing an example of a configuration of a typical two-class classifier.
[Fig. 2] It is a block diagram showing an example of a configuration of an embodiment of an information processing unit to which the invention is applied.
[Fig. 3] It is a flowchart describing the two-class classification process performed by the information processing unit of Fig. 2.
[Fig. 4] It is a chart showing the relation between the scalar value and the class existence probability.
[Fig. 5] It is a flowchart describing the learning process for finding a mapping function.
[Fig. 6] It is a chart showing the other relation between the scalar value and the class existence probability.
[Fig. 7] It is a block diagram showing an example of a configuration of an embodiment of a computer to which the invention is applied.

[Embodiment]

Fig. 2 shows an example of a configuration of an embodiment of an information processing unit to which the invention is applied.

An information processing unit 11 shown in Fig. 2 includes n classifiers $21_1$ to $21_n$ and mappers $22_1$ to $22_n$ (n ≥ 2) and a comparator 23.

The information processing unit 11 classifies which of two classes (for example, class A or B) an input vector x as an input data belongs to, and outputs a value "1" or "-1" as the classification result. For example, the information processing unit 11 outputs the value "1" if the vector x belongs to the class A, and outputs the value "-1" if the vector x belongs to the class B. Thus, the information processing unit 11 is a two-class classifier.

The classifier $21_i$ (i = 1 to n) substitutes an input vector x into a classification function $f_i(x)$ to output a scalar value $y_i$, as the classifier 1 described with reference to Fig. 1. Note that the classification function $f_i(x)$ is a function found based on a statistical learning theory such as SVM and AdaBoost.

The mapper $22_i$ substitutes the scalar value $y_i$ provided from the classifier $21_i$ into a mapping function $g_i(y_i)$ found through a learning process described later to convert the scalar value $y_i$ from the classifier $21_i$ to a class existence probability $p_i$. The converted class existence probability $p_i$ is provided to the comparator 23.

The comparator 23 compares the class existence probabilities $p_i$ to $p_n$ provided from the mapper $22_1$ to $22_n$, respectively, with a predetermined threshold to classify which of the two classes the input data belongs to, and outputs the value "1" or "-1" as the two-class classification result.

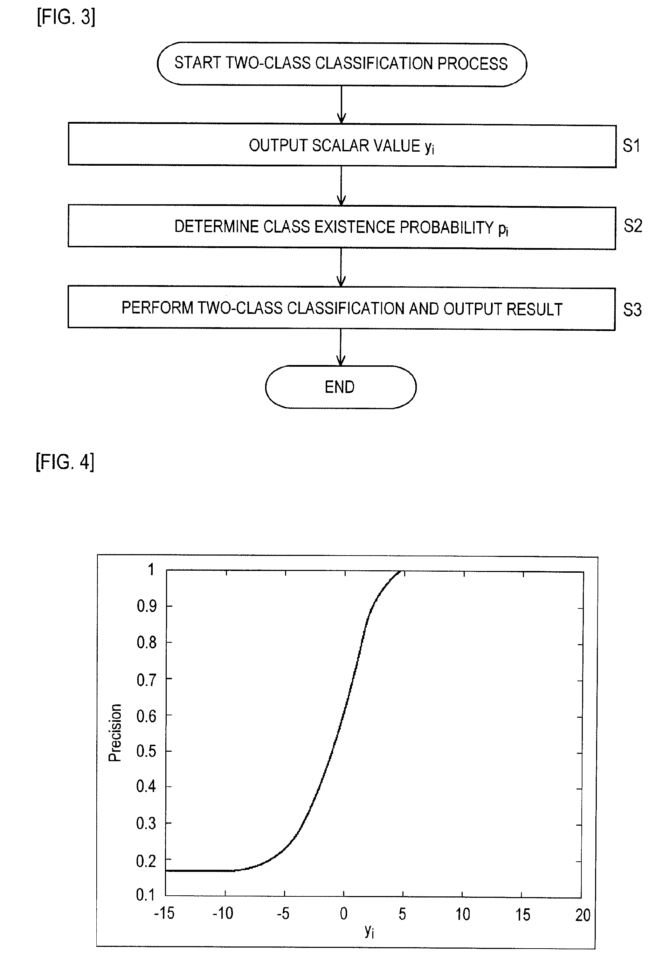

Fig. 3 is a flowchart of the two-class classification process performed by the information processing unit 11.

First, in step S1, the classifier $21_i$ substitutes an input vector x into a classification function $f_i(x)$ to output a scalar value $y_i$.

In step S2, the mapper $22_i$ substitutes the scalar value $y_i$ provided from the classifier $21_i$ into a mapping function

$g_i(y_i)$ to determine a class existence probability $p_i$.

In step S3, the comparator 23 performs two-class classification based on the class existence probabilities $p_1$ to $p_n$ provided from the mapper $22_1$ to $22_n$, respectively, and outputs a two-class classification result. Specifically, the comparator 23 outputs the value "1" or "-1" and completes the process.

As described above, in the information processing unit 11, the two or more classifiers $21_1$ to $21_n$ perform classification on the input data (vector) x, and the mapping functions convert the results of classification $y_i$ to $y_n$ to the class existence probabilities $p_i$ to $p_n$, respectively. Then, two-class classification is performed based on the two or more class existence probabilities $p_1$ to $p_n$, and the final two-class classification result is output.

Next, a learning process for finding a mapping function gi(yi) to be used in the mapper $22_i$ is described.

For the learning process, k test data $(y_j, xt_j)$ (j = 1, 2, ..., k) are provided in advance, the quality and quantity of which is sufficient for a problem to which the learning process needs to be actually applied. The test data $(y_j, xt_j)$ represents the combination of a vector $xt_j$, which is a test data corresponding to a input data, and a two-class classification result $y_j$, which is a known (true) value for the vector $xt_j$.

Then, as a learning process, the information processing unit 11 performs the following process on each of the k test data $(y_j, xt_j)$. Specifically, the information processing unit 11 inputs the vector $xt_j$ to the classifier $21_i$ to obtain a scalar value $y_{tj}$ corresponding to the vector $xt_j$. Then, the information processing unit 11 converts the scalar value $yt_j$ to the value "1" or "-1" (hereinafter referred to as two-class classification test result $Y_{tj}$) based on whether the scalar value $y_{tj}$ is larger or smaller than a predetermined threshold. Thus, in the learning process, first, the information processing unit 11 performs the process similar to that with the conventional two-class classifier shown in Fig. 1 using the classifier $21_i$ and the comparator 23 to determine the two-class classification test result $Y_{tj}$.

The relation between the two-class classification test result $Y_{tj}$, which is the result of process to classify the vector $xt_j$ of the test data $(Y_j, xt_j)$ in the classifier $21_i$ using the classification function $f_i(x)$, and the true value $Y_j$ of the two-class classification result for the vector $xt_j$ (hereinafter referred to as true two-class classification result $Y_j$) can be categorized into following four categories.

The relation between the two-class classification test result $Y_{tj}$ and the true two-class classification result $Y_j$ will fall into one of the following categories:

A first category: True Positive (hereinafter referred to as TP), in which the true two-class classification result $Y_j$ is "1", and the two-class classification test result $Y_{tj}$ is also "1";

A second category: False Positive (hereinafter referred to as FP), in which the true two-class classification result $Y_j$ is "-1", and the two-class classification test result $Y_{tj}$ is "1";

A third category: True Negative (hereinafter referred to as TN), in which the true two-class classification result $Y_j$ is "-1", and the two-class classification test result $Y_{tj}$ is also "-1"; and

A fourth category: False Negative (hereinafter referred to as FN), in which the true two-class classification result $Y_j$ is "1", and the two-class classification test result $Y_{tj}$ is "-1."

Thus, the information processing unit 11 categorizes each of the k test data $(Y_j, xt_j)$ into the categories TP, FP, TN, and FN. Then, the information processing unit 11 further categorizes the k test data $(Y_j, xt_j)$ categorized into the categories TP, FP, TN, and FN in terms of the scalar value $y_i$, based on the scalar value $y_{tj}$. As a result, for each scalar value $y_i$, the test data $(Y_j, xt_j)$ is categorized into the categories TP, FP, TN, and FN. Here, the numbers of test data in TP, FP, TN, and FN for a given scalar value $y_i$ are represented as $TP_m, FP_m, TN_m$, and $FN_m$, respectively.

The information processing unit 11 uses $TP_m, FP_m, TN_m$, and $FN_m$ for each scalar value $y_i$ to determine a correct probability P (precision) given by the formula (1) as class existence probability $p_i$.

[Math 1]

$$p_i = P = \frac{TP_m}{TP_m + FP_m} \qquad \cdots (1)$$

The relation between the scalar value $Y_i$ and the correct probability P as class existence probability $p_i$ is typically a nonlinear monotone increasing relation as shown in Fig. 4.

Thus, the information processing unit 11 finds the mapping function $g_i(y_i)$ of the mapper $22_i$ by approximating the relation between the scalar value $y_i$ and the correct probability P as class existence probability $p_i$, shown in Fig. 4, obtained based on the k test data $(Y_j, xt_j)$ with sufficient quality and quantity, by a predefined function.

1 Some method may approximate the relation shown in Fig. 4 using a function. For example, one of the simplest methods would be to approximate the relation by straight line using least squares method.

Specifically, when the relation shown in Fig. 4 is approximated by a straight line, the mapping function $g_i(y_i)$ can be represented by the equation (2) below.

$$p_i = g_i(y_i) = a \cdot y_i + b \qquad (2)$$

Alternatively, as seen from Fig. 4, the relation between the scalar value $y_i$ and the class existence probability $p_i$ typically resembles a sigmoid function in shape. So, the relation shown in Fig. 4 may be approximated by a sigmoid function. The mapping function $g_i(y_i)$ approximated by a sigmoid function can be represented by the equation below.

[Math 2]

$$p_i = g_i(y_i) = \frac{1}{1+e^{-ay_i}} + b \qquad \cdots (3)$$

Note that, in the equations (2) and (3), a and b are predefined constants determined so as to best fit to the relation shown in Fig. 4.

Alternatively, the mapping function $g_i(y_i)$ can also be found based on a statistical learning method such as SVR (Support Vector Regression).

As an example of finding the mapping function $g_i(y_i)$ based on a statistical learning method, a method of finding the mapping function using $\varepsilon$-SV regression, a kind of SVR, is briefly described below.

$\varepsilon$-SV regression is synonymous with finding a regression function given by the equation (4) below for training data $\{ (x_1, y_1), \ldots, (x_q, y_q) \}$.

$$f(x) = \langle w, x \rangle + b \qquad (4)$$

In the equation (4), $\langle w, x \rangle$ is the inner product of a weighting vector w and x, and b is a bias term.

An optimum function f(x) can be found by maximizing the flatness of the function f, like SVM. Maximizing the flatness of the function f is equivalent to minimizing the size of the weighting vector w, which is equivalent to executing the equation (5) below.

[Math 3]

$$\text{minimize} \quad \frac{1}{2} \|w\|^2$$

$$\text{subject to} \quad \begin{cases} y_i - \langle w, x_i \rangle - b \leq \varepsilon \\ \langle w, x_i \rangle + b - y_i \leq \varepsilon \end{cases} \qquad \cdots (5)$$

The equation (5) is to minimize $\|w\|^2/2$ under the constraint that the approximation of the function f(x) is within $\pm\varepsilon$ with respect to the function f(x) ($\varepsilon > 0$). Note that the subscript i of $x_i$ and $y_i$ in the constraint of the equation (5) is a variable for identifying the training data, and has no relation to the subscript i of the mapping function $g_i(y_i)$, which applies to equations (6) to (11) described later.

The constraint of the equation (5) may be too severe for some training data $\{(x_1, y_1), ..., (x_q, y_q)\}$. In such a case, the constraint is eased according to the equation (6) below introducing two slack variables $\xi_i, \xi_i^*$.
[Math 4]

$$\text{minimize} \quad \frac{1}{2}\|w\|^2 + C\sum_{i=1}^{q}(\xi_i, \xi_i^*)$$

$$\text{subject to} \quad \begin{cases} y_i - \langle w, x_i \rangle - b \leq \varepsilon + \xi_i \\ \langle w, x_i \rangle + b - y_i \leq \varepsilon + \xi_i^* \\ \xi_i, \xi_i^* \geq 0 \end{cases} \quad \cdots (6)$$

The constant C of the equation (6) is a parameter giving the trade-off between the flatness of the function f and the amount of the training data outside of $\pm\varepsilon$.
The optimization problem of the equation (6) can be solved using Lagrange's method of undetermined multiplier. Specifically, setting the partial differentiation of the Lagrangian L of the equation (7) to zero gives the equation (8).
[Math 5]

$$L := \frac{1}{2}\|w\|^2 + C\sum_{i=1}^{q}(\xi_i + \xi_i^*) - \sum_{i=1}^{q}(\eta_i \xi_i + \eta_i^* \xi_i^*)$$

$$- \sum_{i=1}^{q}\alpha_i(\varepsilon + \xi_i - y_i + \langle w, x_i \rangle + b)$$

$$- \sum_{i=1}^{q}\alpha_i^*(\varepsilon + \xi_i^* + y_i - \langle w, x_i \rangle - b) \quad \cdots (7)$$

[Math 6]

$$\frac{\partial L}{\partial b} = \sum_{i=1}^{q} (\alpha_i^* - \alpha_i) \qquad = 0$$

$$\frac{\partial L}{\partial w} = w - \sum_{i=1}^{q} (\alpha_i - \alpha_i^*) x_i = 0$$

$$\frac{\partial L}{\partial \xi_i} = C - \alpha_i - \eta_i \qquad = 0$$

$$\frac{\partial L}{\partial \xi_i^*} = C - \alpha_i^* - \eta_i^* \qquad = 0 \qquad \cdots (8)$$

In the equations (7) and (8), $\alpha_i$, $\alpha_i^*$, $\eta_i$, and $\eta_i^*$ are constants equal to or larger than zero.

Substituting the equation (8) into the equation (7) causes the equation (7) to come down to the problem of maximizing the equation (9) below.

[Math 7]

$$\text{maximize} \begin{cases} -\frac{1}{2} \sum_{i,j=1}^{q} (\alpha_i - \alpha_i^*)(\alpha_j - \alpha_j^*) \langle x_i, x_j \rangle \\ -\varepsilon \sum_{i=1}^{q} (\alpha_i + \alpha_i^*) + \sum_{i=1}^{q} y_i (\alpha_i - \alpha_i^*) \end{cases}$$

$$\text{subject to} \quad \sum_{i=1}^{q} (\alpha_i - \alpha_i^*) = 0 \text{ and } \alpha_i, \alpha_i^* \in [0, C] \qquad \cdots (9)$$

Here, from the fact that $\eta_i$ and $\eta_i^*$ have no relation to the maximization problem, which is seen from the equation (8), and from the equation below,

[Math 8]

$$w = \sum_{i=1}^{q} (\alpha_i - \alpha_i^*) x_i$$

the regression function f (x) can be represented as the equation (10) below.

[Math 9]

$$f(x) = \sum_{i=1}^{q} (\alpha_i - \alpha_i^*)\langle x_i, x \rangle + b \qquad \cdots (10)$$

Also, the regression function can be extended to a nonlinear function by using the kernel trick, like SVM. When using a nonlinear function as regression function, the regression function can be found by solving the following maximization problem (detailed description is not given here).
[Math 10]

$$\text{maximize} \begin{cases} -\dfrac{1}{2} \displaystyle\sum_{i,j=1}^{q} (\alpha_i - \alpha_i^*)(\alpha_j - \alpha_j^*) k(x_i, x_j) \\ -\varepsilon \displaystyle\sum_{i=1}^{q} (\alpha_i + \alpha_i^*) + \sum_{i=1}^{q} y_i (\alpha_i - \alpha_i^*) \end{cases}$$

$$\text{subject to} \ \sum_{i=1}^{q} (\alpha_i - \alpha_i^*) = 0 \ \text{and} \ \alpha_i, \alpha_i^* \in [0, C] \qquad \cdots (11)$$

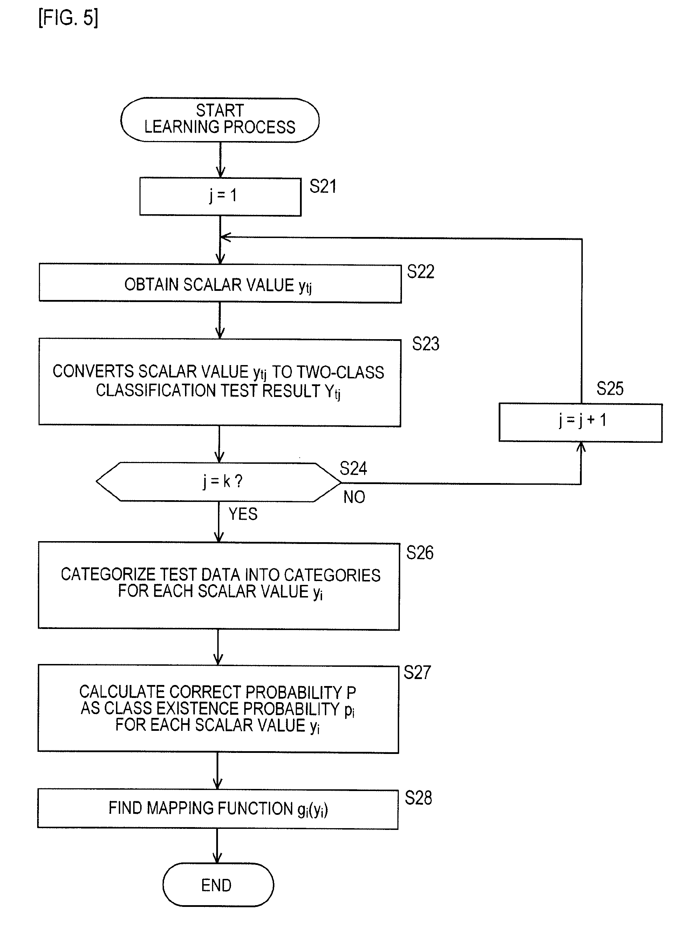

By finding the regression function as described above, the mapping function $g_i(y_i)$ can also be found based on a statistical learning method.
Next, the learning process for finding a mapping function $g_i(y_i)$ for the mapper 22i is described with reference to a flowchart shown in Fig. 5.
First, in step S21, the information processing unit 11 sets a variable j for identifying test data to 1.
In step S22, the information processing unit 11 inputs a vector $xt_j$ of test data $(Y_j, xt_j)$ to the classifier $21_i$ to obtain a scalar value $y_{tj}$ corresponding to the vector $xt_j$.
In step S23, the information processing unit 11 converts the scalar value $y_{tj}$ to the value "1" or "-1" (two-class classification test result $Y_{tj}$) based on whether the scalar value $y_{tj}$ is larger or smaller than a predetermined threshold.
In step S24, the information processing unit 11 determines whether the variable j is equal to k or not, that is, whether or not the two-class classification test result $Y_{tj}$ has been determined for all prepared test data.
In step S24, if determined that the variable j is not equal to k, that is, the two-class classification test result $Y_{tj}$ has not been determined for all the test data yet, the information processing unit 11 increments the variable j by 1 in step S25 and the process returns to step S22. Then, the process proceeds to determining a two-class classification test result $Y_{tj}$ for next test data $(Y_j, xt_j)$.
On the other hand, in step S24, if determined that the variable j is equal to k, the process proceeds to step S26 and the information processing unit 11 categorizes the k test data $(Y_j, xt_j)$ into the four categories TP, FP, TN, and FN for each scalar value $y_i$. As a result, for each scalar value $y_i$, the numbers of test data in TP, FP, TN, and FN, referred to as $TP_m$, $FP_m$, $TN_m$, and $FN_m$, respectively, are obtained.
Then, in step S27, the information processing unit 11 calculates a correct probability P as class existence probability $p_i$ for each scalar value $y_i$.
In step S28, the information processing unit 11 approximates the relation between the scalar value $y_i$ and the class existence probability $p_i$ by a predefined function such as the equation (2) or (3) to find the mapping function $g_i(y_i)$, and ends the process.
In this way, the mapping function $g_i(y_i)$ for converting the scalar value $y_i$ provided from the classifier $21_i$ to the class existence probability $p_i$ can be found.
Note that, in the above-described example, the correct probability P (precision) given by the equation (1) is used as the class existence probability $p_i$, however, a value other than the correct probability P can also be used as the

class existence probability $p_i$. For example, a misclassification probability FPR (False Positive Rate) may be used as the class existence probability $p_i$. The misclassification probability FPR can be calculated by the equation (12).

[Math 11]

$$FPR = \frac{FP_m}{FP_m + TN_m} \qquad \cdots (12)$$

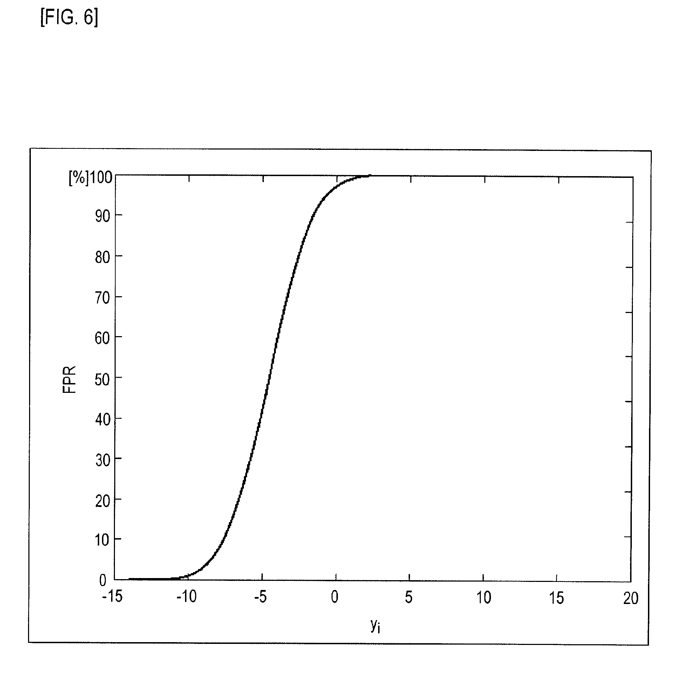

The relation between the scalar value $y_i$ and the class existence probability $p_i$ when the misclassification probability FPR is used as the class existence probability $p_i$ is also a nonlinear monotone increasing relation as shown in Fig. 6. Thus, also in this case, the mapping function $g_i(y_i)$ representing the relation between the scalar value $y_i$ and the class existence probability $p_i$ can also be found by approximating by the linear function of the equation (2) or the sigmoid function of the equation (3).

As described above, in step S2 of the two-class classification process shown in Fig. 3, the scalar value $y_i$ provided from the classifier $21_i$ is converted (mapped) to the class existence probability $p_i$ by using the mapping function $g_i(y_i)$ found through the learning process.

The classification function $f_i(x)$ of the classifier $21_i$ is typically determined based on a statistical learning theory such as SVM and AdaBoost, as described above. In general, the scalar value $y_i$ output using the classification function $f_i(x)$ often represents the distance from the classification boundary surface. In this case, the magnitude of the scalar value $y_i$ is highly correlated with that of the class existence probability. However, the classification boundary surface is typically in nonlinear shape, so the relation between the distance from the classification boundary surface and the class existence probability is also nonlinear. Also, the relation between the distance from the classification boundary surface and the class existence probability highly varies depending on a learning algorithm, learning data, learning parameter and the like. Accordingly, when the comparator 23 compares the scalar values $y_i$ to $y_n$ output from the classifiers $21_1$ to $21_n$ on a single criterion, it is difficult to obtain a correct two-class classification result, because there is no commonality among the values output from the classifiers $21_1$ to $21_n$.

In the information processing unit 11, the scalar values $y_1$ to $y_n$ output from the classifiers $21_1$ to $21_n$ are mapped to a common measure (that is, class existence probability) by the mapper $22_1$ to $22_n$ and compared, which allows the comparator 23 to perform a correct two-class classification even by comparing on a single criterion. Thus, the information processing unit 11 can correctly perform two-class classification based on the outputs from the two or more classifiers $21_1$ to $21_n$.

The values output from the mapper $22_1$ to $22_n$ are values having a meaning of class existence probability. So, the values output from the mapper $22_1$ to $22_n$ can be used for a purpose other than two-class classification. For example, the values output from the mapper $22_1$ to $22_n$ may be used for probability consolidation with another algorithm, or may be used as probability values of time-series data generated from Hidden Markov Model (HMM), Bayesian Network or the like.

Accordingly, in the above-described embodiment, the information processing unit 11 is described as having two or more classifiers $21_1$ to $21_n$ and mappers $22_1$ to $22_n$ ($n \geq 2$), however, even if the information processing unit 11 has only one classifier $21_1$ and mapper $22_1$, they can convert input data to a useful value that can be used for a purpose other than two-class classification, which is higher advantage than the conventional two-class classifier described with reference to Fig. 1. Thus, the information processing unit 11 may include only one classifier 21 and mapper 22.

Then, when the information processing unit 11 has two or more classifiers 21 and mappers 22, the information processing unit 11 provides two advantage. One is that two or more scalar values can be compared on a common measure. The other is that the classifiers 21 and mappers 22 can convert input data to a useful value that can be used for a purpose other than two-class classification.

The series of processes described above can be implemented by hardware or software. When the series of processes is implemented by software, a program including the software is installed from a program storage medium to a computer embedded in dedicated hardware or, for example, a general-purpose personal computer that can perform various functions through the installation of various programs.

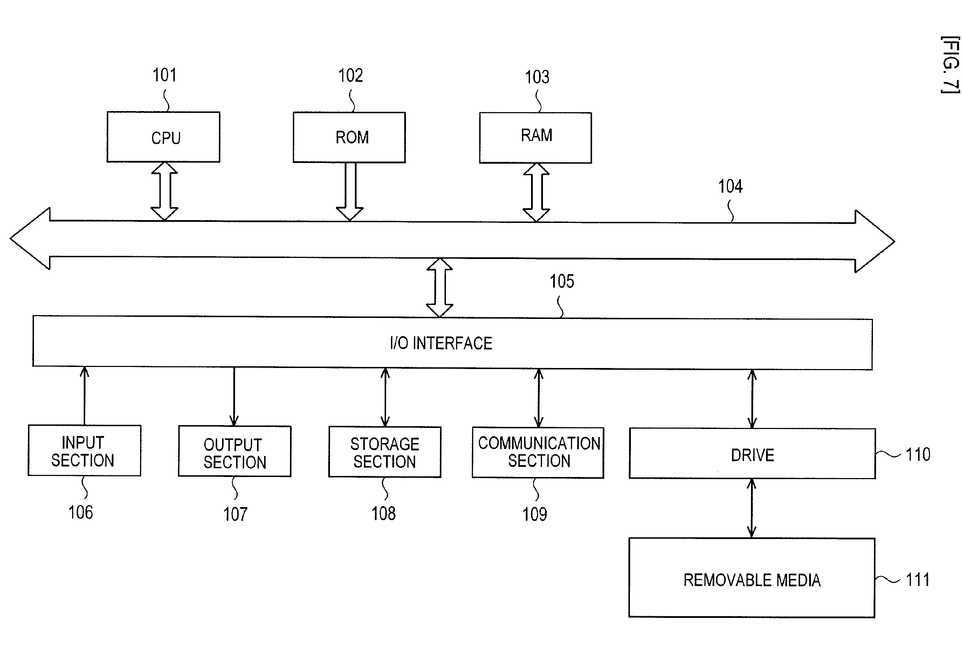

Fig. 7 is a block diagram showing an example of a configuration of a computer hardware that implements the series of processes as described above by program.

The computer includes a central processing unit (CPU) 101, a read only memory (ROM) 102, and a random access memory (RAM) 103, all of which are connected to each other by a bus 104.

In addition, an I/O interface 105 is connected to the bus 104. To the I/O interface 105, an input section 106 including a keyboard, a mouse, a microphone and the like, an output section 107 including a display, a speaker and the like, a storage section 108 including a hard disk, a nonvolatile memory and the like, a communication section 109 including a network interface and the like, and a drive 110 driving a removable media 111 such as a magnetic disc, an optical disc, a magneto-optical disc or a semiconductor memory are connected.

In the computer configured as above, the CPU 101 performs the series of processes described above (two-class classification process or learning process) by, for example, loading a program stored in the storage section 108 to the RAM 103 through the I/O interface 105 and bus 104, and executing the program.

For example, the program to be executed by the computer (CPU 101) is provided through the removable media 111, which is a package media such as a magnetic disc (including a flexible disk), an optical disc (including a compact disc-read only memory (CD-ROM) and a digital versatile disc (DVD)), a magneto-optical disc and a semiconductor memory, in which the program is recorded, or through a wired or wireless transmission medium such as a local area network, the internet, or a digital satellite broadcasting.

Note that the program to be executed by the computer may be a program that is processed in time series in the order as described herein, or may be a program that is processed in parallel or when needed (for example, when called).

The steps described in the flowcharts herein include processes to be performed in time series in the order as described, of course, and processes to be performed in parallel or individually even if not necessarily performed in time series.

The embodiment of the invention is not limited to the above-described embodiment, but may be subject to various modifications without departing from the spirit of the invention.

[Description of Reference Numerals and Signs]

| 11 | information processing unit |
|---|---|
| $21_1$ to $21_n$ | classifier |
| $22_1$ to $22_n$ | mapper |
| 23 | comparator |

## Claims

1. An information processing unit comprising:

   a classification means for outputting a scalar value for an input data using a classification function;
   a mapping means for mapping the scalar value to a probability value using a mapping function found using probability values calculated from test results that are scalar values output from the classification means when test data are provided to the classification means; and
   a two-class classification means for classifying which of two classes the input data belongs to based on the probability value output from the mapping means.

2. The information processing unit according to claim 1,
   comprising two or more sets of the classification means and the mapping means, and
   wherein the two-class classification means classifies which of the two classes the input data belongs to based on the probability values output from the two or more mapping means.

3. The information processing unit according to claim 2,
   wherein the probability is a class existence probability, and
   wherein the mapping means maps the scalar value to the class existence probability value.

4. The information processing unit according to claim 3,

   wherein the class existence probability is a correct probability.

5. The information processing unit according to claim 3,
   wherein the class existence probability is a misclassification probability.

**6.** The information processing unit according to claim 3,
wherein the mapping function is represented as a linear function or sigmoid function.

**7.** The information processing unit according to claim 3,
wherein the mapping means finds the mapping function based on Support Vector Regression.

**8.** An information processing method,
wherein an information processing unit comprises a classification means, a mapping means, and a two-class classification means, and classifies which of two classes an input data belongs to,
wherein the classification means outputs a scalar value for the input data using a classification function;
wherein the mapping means maps the scalar value to a probability value using a mapping function found using probability values calculated from test results that are scalar values output from the classification means when test data are provided to the classification means; and
wherein the two-class classification means classifies which of the two classes the input data belongs to based on the probability value output from the mapping means.

**9.** A program for causing a computer to operate as:

a classification means for outputting a scalar value for an input data using a classification function;
a mapping means for mapping the scalar value to a probability value using a mapping function found using probability values calculated from test results that are scalar values output from the classification means when test data are provided to the classification means; and
a two-class classification means for classifying which of two classes the input data belongs to based on the probability value output from the mapping means.

[FIG.1]

x → CLASSIFIER y=f(x) (1) → y → COMPARATOR (2) → Y ∈ {−1, 1}

[FIG.2]

INPUT DATA x

CLASSIFIER $f_1(x)$ (21₁) → $y_1$ → MAPPER $g_1(y_1)$ (22₁) → $p_1$

CLASSIFIER $f_2(x)$ (21₂) → $y_2$ → MAPPER $g_2(y_2)$ (22₂) → $p_2$

CLASSIFIER $f_i(x)$ (21ᵢ) → $y_i$ → MAPPER $g_i(y_i)$ (22ᵢ) → $p_i$

CLASSIFIER $f_n(x)$ (21ₙ) → $y_n$ → MAPPER $g_n(y_n)$ (22ₙ) → $p_n$

COMPARATOR (23) → RESULT OF TWO-CLASS CLASSIFICATION

11

[FIG. 3]

$$\boxed{\text{START TWO-CLASS CLASSIFICATION PROCESS}}$$

↓

| OUTPUT SCALAR VALUE $y_i$ | S1 |

↓

| DETERMINE CLASS EXISTENCE PROBABILITY $p_i$ | S2 |

↓

| PERFORM TWO-CLASS CLASSIFICATION AND OUTPUT RESULT | S3 |

↓

$$\boxed{\text{END}}$$

[FIG. 4]

[FIG. 5]

START
LEARNING PROCESS

$j = 1$ — S21

OBTAIN SCALAR VALUE $y_{tj}$ — S22

CONVERTS SCALAR VALUE $y_{tj}$ TO TWO-CLASS
CLASSIFICATION TEST RESULT $Y_{tj}$ — S23

$j = k$ ? — S24

NO

$j = j + 1$ — S25

YES

CATEGORIZE TEST DATA INTO CATEGORIES
FOR EACH SCALAR VALUE $y_i$ — S26

CALCULATE CORRECT PROBABILITY P
AS CLASS EXISTENCE PROBABILITY $p_i$
FOR EACH SCALAR VALUE $y_i$ — S27

FIND MAPPING FUNCTION $g_i(y_i)$ — S28

END

[FIG. 6]

[FIG. 7]

| INTERNATIONAL SEARCH REPORT | International application No. |
|---|---|
| | PCT/JP2009/059308 |

**A. CLASSIFICATION OF SUBJECT MATTER**
*G06N3/00(2006.01)i, G06T7/00(2006.01)i*

According to International Patent Classification (IPC) or to both national classification and IPC

**B. FIELDS SEARCHED**

Minimum documentation searched (classification system followed by classification symbols)
G06N3/00, G06T7/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | Kazuko TAKAHASHI et al., "Fukusu no Bunrui Score o Mochiita Class Shozoku Kakuritsu no Suitei", Journal of Natural Language Processing, 10 April, 2008 (10.04.08), Vol.15, No.2, pages 3 to 38 | 1-9 |
| X | JP 2003-36262 A (Nippon Telegraph And Telephone Corp.), 07 February, 2003 (07.02.03), Par. Nos. [0025] to [0031]; Fig. 2 (Family: none) | 1-9 |
| X | O. Luaces et.al., Prediction of probability of survival in critically ill patients optimizing the Area Under the ROC Curve, Proceedings of IJCAI-2007, 2007.01, pp.956-961 | 1-9 |

☐ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 June, 2009 (05.06.09) | 16 June, 2009 (16.06.09) |

| Name and mailing address of the ISA/ | Authorized officer |
|---|---|
| Japanese Patent Office | |
| Facsimile No. | Telephone No. |

Form PCT/ISA/210 (second sheet) (April 2007)